# EUROPÄISCHE PATENTSCHRIFT

(11) **EP 0 624 739 B1**
(45) Veröffentlichungstag und Bekanntmachung des Hinweises auf die Patenterteilung: **28.05.1997**
(21) Anmeldenummer: 94104543.7
(22) Anmeldetag: 23.03.1994
(51) Int. Cl.: F16H 37/04, F16H 3/091

(54) **Zahnräderwechselgetriebe der Vorgelegebauart**
Countershaft transmission
Transmission à arbre intermédiaire

(30) Priorität: 14.05.1993 DE 4316153
(43) Veröffentlichungstag der Anmeldung: 17.11.1994
(73) Patentinhaber: MERCEDES-BENZ AG, 70327 Stuttgart (DE)
(72) Erfinder: Trick, Wolfgang, Dipl.-Ing., D-73269 Hochdorf (DE)

(56) Entgegenhaltungen:
- EP-A- 0 448 457
- DE-A- 2 916 738
- DE-A- 4 226 575
- FR-A- 2 386 741
- GB-A- 2 028 935
- US-A- 2 886 982
- Druckschrift F 43 542/RT 3427-789 der Zahnradfabrik Friedrichshafen AG

## Beschreibung

Die Erfindung bezieht sich auf ein Zahnräderwechselgetriebe nach dem Oberbegriff von Patentanspruch 1.

Es ist eine Getriebebaureihe mit einem Zahnräderwechselgetriebe der eingangs genannten Art als sechsgängiges Einbereichsgetriebe S6-66 bekannt (Druckschrift F 43 542/RT 3427-789 der Zahnradfabrik Friedrichshafen AG), das durch eine Splitgruppe GV 66 zu einem zwölfgängigen Vielganggetriebe S6-66+GV 66 zur Bildung einer Getriebebaureihe erweiterbar ist.

Bei derartigen Getriebebaureihen besteht das Problem, daß das Einbereichsgetriebe in der Regel aus Fahrleistungsgründen progressiv zugunsten des Übersetzungssprunges zwischen den beiden höchsten Gängen, beim bekannten Einbereichsgetriebe also zwischen den Gangübersetzungen des V. Ganges und des VI. Ganges gestuft ist, so daß durch "Splitten" der Hauptfahrgänge IV, V und VI unterschiedliche Splitsprünge entstehen. Um diesen Nachteil zu vermeiden, sind bei dem bekannten zwölfgängigen Vielganggetriebe S6-66+GV 66 diejenigen Zahnradstufen, welche den Zahnradstufen bei dem sechsgängigen Einbereichsgetriebe S6-66 zur Bildung der dortigen Gänge IV und V entsprechen, in ihrer Übersetzung gegenüber den diesbezüglichen Zahnradstufen des Einbereichsgetriebes S6-66 geändert, so daß bei der bekannten Getriebebaureihe nicht das gleiche Grundgetriebe sowohl für die Einbereichsgetriebe- als auch für die Vielganggetriebe-Mitglieder verwendet werden kann.

Aus der DE 41 29 290 C1 ist ein Zahnräderwechselgetriebe für Kraftfahrzeuge bekannt, bei dem eine Eingangswelle und eine Ausgangswelle parallel zu einer Vorgelegewelle angeordnet sind und eine jeweilige Antriebsverbindung zwischen Eingangswelle und Vorgelegewelle über zwei wechselweise einschaltbare Zahnradstufen sowie eine Antriebsverbindung zwischen Vorgelegewelle und Ausgangswelle über eine weitere Zahnradstufe herstellbar ist, und bei dem bei einer der Zahnradstufen das Vorgelegewellenzahnrad die kleinere Zähnezahl gegenüber dem mit ihm kämmenden Hauptwellenzahnrad sowie lediglich zwei der drei Zahnradstufen die gleiche Zahnsummenzahl aufweisen.

Um eine Getriebebaureihe mit mehreren Getriebetypen für verschiedene zulässige Eingangsdrehmomente unter Beachtung einer kleinstmöglichen Teilevielfalt zu schaffen, ist dieses bekannte Zahnräderwechselgetriebe so ausgelegt, daß ein zweites Vorgelegewellenzahnrad, welches zu einer der beiden die gleiche Zahnsummenzahl aufweisenden Zahnradstufen gehört, die kleinere Zähnezahl aufweist.

Die der Erfindung zugrunde liegende Aufgabe besteht im wesentlichen darin, eine Getriebebaureihe zu schaffen, bei der für Einbereichsgetriebe und Vielganggetriebe ein im wesentlichen unverändertes Grundgetriebe verwendet werden kann.

Die erläuterte Aufgabe ist in vorteilhafter Weise mit den kennzeichnenden Merkmalen von Patentanspruch 1 gelöst.

Bei dem Zahnräderwechselgetriebe nach der Erfindung ist bei seiner Verwendung als Vielganggetriebe eine enge gleichmäßige Stufung der oberen sechs Fahrgänge erreicht und trotzdem nur die Getriebekonstante gegenüber der Ausführung als Einbereichsgetriebe geändert, so daß eine geringstmögliche Teilevielfalt für die Getriebebaureihe erreicht ist.

Während bei dem bekannten zwölfgängigen Vielganggetriebe die Spreizung lediglich um den Splitsprung größer ist als beim entsprechenden sechsgängigen Einbereichsgetriebe, ist bei dem zwölfgängigen Vielganggetriebe nach der Erfindung die Spreizung zusätzlich noch durch die größere Übersetzung der Getriebekonstanten gegenüber der Spreizung des zugehörigen Einbereichsgetriebes erhöht. Diese höhere Spreizung ist bei Vielganggetrieben besonders vorteilhaft, weil diese im Vergleich zu den bereichsgetrieben für schwerere Einsätze vorgesehen werden.

Einzelheiten der Erfindung ergeben sich aus der nachstehenden Beschreibung eines in der Zeichnung schematisch dargestellten Ausführungsbeispieles. In der Zeichnung bedeuten
- Figur 1: das Getriebeschema eines Zahnräderwechselgetriebes nach der Erfindung in der Ausführung als Einbereichsgetriebe,
- Figur 2: ein Schaltbild für einen Handschalthebel zum Schalten des Zahnräderwechelgetriebes von Figur 1,
- Figur 3: ein Diagramm für den Kraftfluß in den einzelnen Gängen des Zahnräderwechselgetriebes von Figur 1,
- Figur 4: das Getriebeschema eines Zahnräderwechselgetriebes nach der Erfindung in der Ausführung als Vielganggetriebe,
- Figur 5: ein Schaltbild für einen Handschalthebel zum Schalten des Zahnräderwechselgetriebes von Figur 4,
- Figur 6: ein Diagramm für den Kraftfluß in den einzelnen Gängen des Zahnräderwechselgetriebes von Figur 4, und
- Figur 7: eine Tabelle zur Gegenüberstellung von Übersetzungsdaten der beiden Zahnräderwechselgetriebe von Figur 1 und Figur 4.

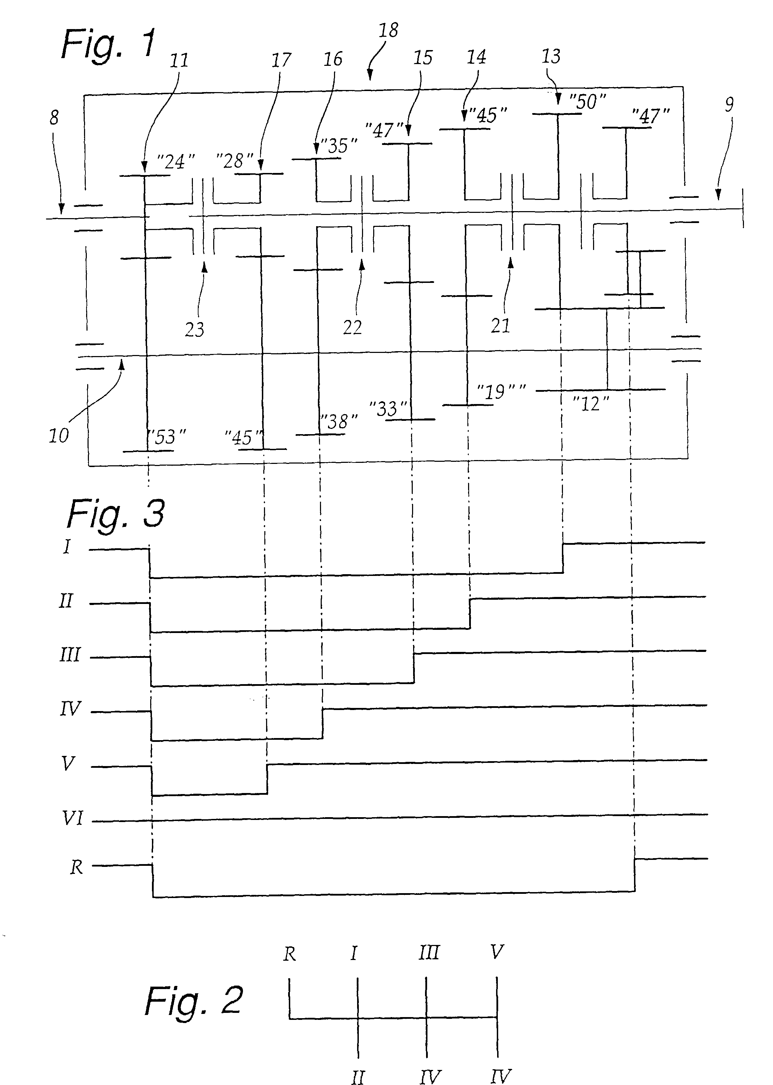

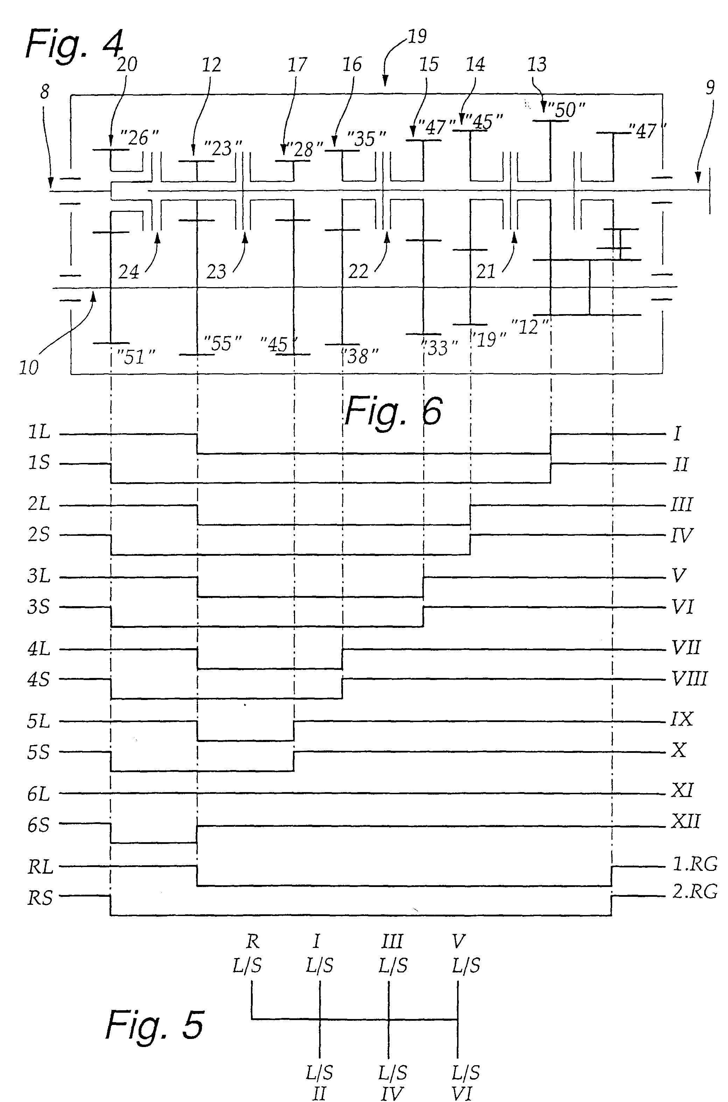

Bei dem Einbereichsgetriebe 18 der Figur 1 sind zu einer Eingangswelle 8 eine Ausgangswelle 9 koaxial und eine Vorgelegewelle 10 parallel angeordnet.

Die Eingangswelle 8 steht durch eine in Form einer Zahnradstufe gebildete Getriebekonstante 11 mit der Vorgelegewelle 10 in ständiger Antriebsverbindung. Die Getriebekonstante 11 hat ein Übersetzungsverhältnis i₁₁ = 53:24 = 2.21.

Zahnradstufen 13 bis 17 zur Bildung von Gangübersetzungen für fünf Vorwärtsgänge I bis V sind als jeweilige Antriebsverbindung zwischen Vorgelegewelle 10 und Ausgangswelle 9 vorgesehen, deren Losräder durch Wechselschaltkupplungen 21 bis 23 in bekannter Weise mit ihrer Welle, in diesem Falle mit der Ausgangswelle 9, kuppelbar sind.

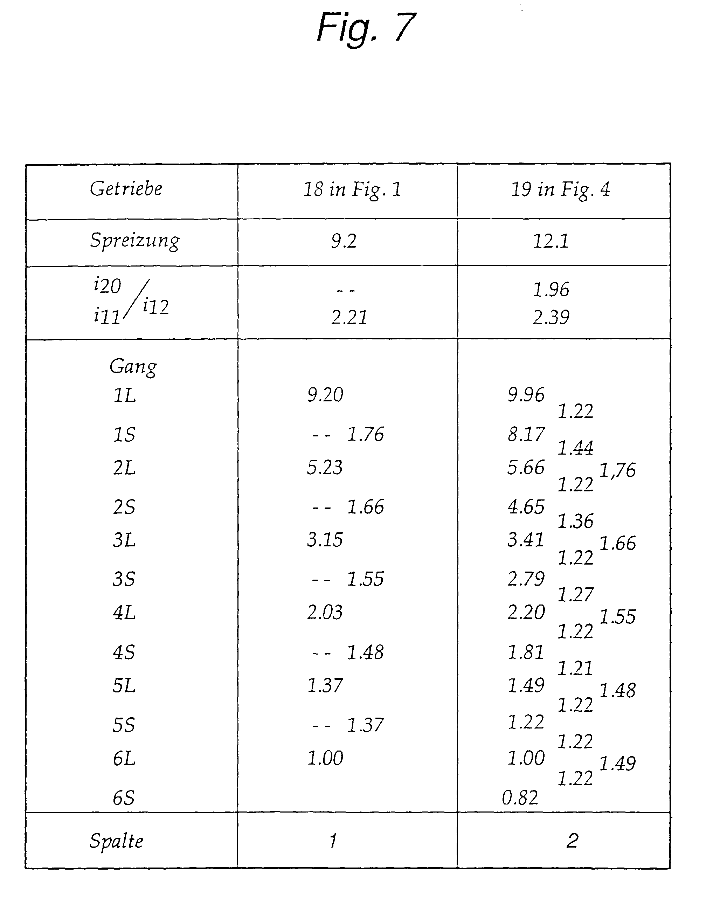

Die Zahnradstufe 13 für den niedrigsten Vorwärtsgang I hat ein Übersetzungsverhältnis von 50:12, so daß sich eine Gangübersetzung von 9.20 (Figur 7, Spalte 1, Zeile 1L) ergibt.

Die Zahnradstufe 14 für den II. Gang hat ein Übersetzungsverhältnis von 45:19, so daß sich eine Gangübersetzung von 5.23 (Figur 7, Spalte 1, Zeile 2L) und ein Stufensprung zum I. Gang von 1.76 ergeben.

Die Zahnradstufe 15 für den III. Gang hat ein Übersetzungsverhältnis von 47:33, so daß sich eine Gangübersetzung von 3.15 (Figur 7, Spalte 1, Zeile 3L) und ein Stufensprung zum II. Gang von 1.66 ergeben.

Die Zahnradstufe 16 für den IV. Gang hat ein Übersetzungsverhältnis von 35:38, so daß sich eine Gangübersetzung von 2.03 (Figur 7, Spalte 1, Zeile 4L) und ein Stufensprung von 1.55 zum III. Gang ergeben.

Die Zahnradstufe 17 für den V. Gang hat ein Übersetzungsverhältnis von 28:45, so daß sich eine Gangübersetzung von 1.37 und ein Stufensprung zum IV. Gang von 1.48 ergeben.

Das Übersetzungsverhältnis des VI. Ganges ist 1:1 ausgelegt, wobei dieser Gang durch Ankuppeln der Ausgangswelle 9 über die Wechselschaltkupplung 23 an das mit der Eingangswelle 8 drehfest verbundene Zahnrad der Getriebekonstanten 11 geschaltet wird. Der Stufensprung vom VI. Gang zum V. Gang beträgt mithin 1.37 (Figur 7, Spalte 1, Zeilen 5S und 6L).

Bei dem Vielganggetriebe 19 der Figur 4 sind eine Ausgangswelle 9 koaxial und eine Vorgelegewelle 10 parallel zu einer Eingangswelle 8 angeordnet.

Eine Getriebekonstante 12 in Form einer Zahnradstufe und eine Splitgruppe 20 ebenfalls in Form einer Zahnradstufe sind durch eine Wechselschaltkupplung 24 fakultativ als Antriebsverbindung zwischen Eingangswelle 8 und Vorgelegewelle 10 einschaltbar.

Die Getriebekonstante 12 hat ein Übersetzungsverhältnis von 55:23 = 2.39 (Figur 7, Spalte 2, Zeile i₁₂), welches mithin höher ist als das Übersetzungsverhältnis von 2.21 der Getriebekonstanten 11 des Einbereichsgetriebes 18 von Figur 1.

Die Splitgruppe 20 hat ein Übersetzungsverhältnis von 51:26 = 1.96 (Figur 7, Spalte 2, Zeile i₂₀), welches mithin niedriger (schneller) ist als das Übersetzungsverhältnis von 2.39 der Getriebekonstanten 12 und zu letzterem in einer weiter unten erläuterten bestimmten Beziehung steht.

Zur Bildung von fünf Grundübersetzungen, aus denen jeweils zwei Gangübersetzungen unter Vermittlung der Getriebekonstanten 12 und der Splitgruppe 20 erhalten werden, sind fünf Zahnradstufen 13 bis 17 als Antriebsverbindung zwischen Vorgelegewelle 10 und Ausgangswelle 9 durch drei Wechselschaltkupplungen 21 bis 23 einschaltbar.

Die Zahnradstufe 13 für die Gänge I und II hat eine Grundübersetzung von 50:12 und ist daher mit der Zahnradstufe 13 des Einbereichsgetriebes 18 der Figur 1 identisch. Der I. Gang wird entsprechend wie beim Einbereichsgetriebe 18 durch multiplikative Verknüpfung der Zahnradstufe 13 mit der Getriebekonstanten 12 gebildet (Figur 6) und hat mithin eine Gangübersetzung von 9.96 (Figur 7, Spalte 2, Zeile 1L). Der II. Gang wird durch multiplikative Verknüpfung der Zahnradstufe 13 mit der Splitgruppe 20 gebildet (Figur 6) und hat mithin eine Gangübersetzung von 8.17, so daß sich ein Stufensprung zum I. Gang von 1.22 ergibt (Figur 7, Spalte 2, Zeile 1S).

Die Zahnradstufe 14 für die Gänge III und IV hat eine Grundübersetzung von 45:19 und ist daher mit der Zahnradstufe 14 des Einbereichsgetriebes 18 von Figur 1 identisch. Der III. Gang wird durch multiplikative Verknüpfung der Zahnradstufe 14 mit der Getriebekonstanten 12 (Figur 6) entsprechend wie beim Einbereichsgetriebe 18 der Figur 1 gebildet und hat mithin eine Gangübersetzung von 5.66, die zu einem Stufensprung von 1.44 zum II. Gang und zu einem theoretischen Stufensprung von 1.76 zu dem ebenfalls unter Vermittlung der Getriebekonstanten 12 gebildeten I. Gang führt (Figur 7, Spalte 2, Zeile 2L). Dieser theoretische Stufensprung von 1.76 ist somit gleich dem Stufensprung zwischen den Gängen I und II beim Einbereichsgetriebe 18 von Figur 1. Der IV. Gang wird durch multiplikative Verknüpfung der Zahnradstufe 14 mit der Splitgruppe 20 gebildet (Figur 6) und hat daher eine Gangübersetzung von 4.65, die zu einem Stufensprung von 1.22 gegenüber zum III. Gang führt (Figur 7, Spalte 2, Zeile 2S).

Die Zahnradstufe 15 für die Gänge V und VI hat eine Grundübersetzung von 47:33 und ist daher mit der Zahnradstufe 15 des Einbereichsgetriebes 18 von Figur 1 identisch. Der V. Gang wird durch multiplikative Verknüpfung der Zahnradstufe 15 mit der Getriebekonstanten 12 (Figur 6) entsprechend wie beim Einbereichsgetriebe 18 der Figur 1 gebildet und hat somit eine Gangübersetzung von 3.41, die zu einem Stufensprung von 1.36 gegenüber dem IV. Gang und zu einem theoretischen Stufensprung von 1.66 gegenüber dem ebenfalls unter Vermittlung der Getriebekonstanten 12 gebildeten III. Gang führt (Figur 7, Spalte 2, Zeile 3L). Mithin ist der theoretische Stufensprung von 1.66 gleich dem Stufensprung beim Einbereichsgetriebe 18 der Figur 1 zwischen den Gängen II und III. Der IV. Gang wird beim Vielganggetriebe 19 der Figur 4 durch multiplikative Verknüpfung der Zahnradstufe 15 mit der Splitgruppe 20 gebildet (Figur 6) und hat somit eine Gangübersetzung von 2.79, die zu einem Stufensprung von 1.22 gegenüber dem V. Gang führt (Figur 7, Spalte 2, Zeile 3S).

Die Zahnradstufe 16 für die Gänge VII und VIII hat eine Grundübersetzung von 35:38 und ist daher mit der Zahnradstufe 16 des Einbereichsgetriebes 18 von Figur 1 identisch. Der VII. Gang wird beim Vielganggetriebe 19 durch multiplikative Verknüpfung der Zahnradstufe 16 mit der Getriebekonstanten 12 (Figur 6) entsprechend wie beim Einbereichsgetriebe 18 gebildet und hat somit eine Gangübersetzung von 2.20, die zu einem Stufensprung von 1.27 zum VI. Gang und zu einem theoretischen Stufensprung von 1.55 gegenüber dem ebenfalls unter Vermittlung der Getriebekonstanten 12 gebildeten V. Gang führt (Figur 7, Spalte 2, Zeile 4L). Der theoretische Stufensprung von 1.55 ist gleich dem Stufensprung zwischen den Gängen III und IV beim Einbereichsgetriebe 18 der Figur 1. Der VIII. Gang wird beim Vielganggetriebe 19 der Figur 4 durch multiplikative Verknüpfung der Zahnradstufe 16 mit der Splitgruppe 20 gebildet (Figur 6) und hat somit eine Gangübersetzung von 1.81 (Figur 7, Spalte 2, Zeile 4S), die zu einem Stufensprung von 1.22 gegenüber dem VII. Gang führt.

Die Zahnradstufe 17 des Vielganggetriebes 19 für die Gänge IX und X hat eine Grundübersetzung von 28:45 und ist daher mit der Zahnradstufe 17 des Einbereichsgetriebes 18 von Figur 1 identisch. Der IX. Gang wird durch multiplikative Verknüpfung der Zahnradstufe 17 mit der Getriebekonstanten 12 (Figur 6) entsprechend wie beim Einbereichsgetriebe 18 gebildet und hat somit eine Gangübersetzung von 1.49 (Figur 7, Spalte 2, Zeile 5L), die zu einem Stufensprung von 1.21 zum VIII. Gang und zu einem theoretischen Stufensprung von 1.48 gegenüber dem ebenfalls unter Vermittlung der Getriebekonstanten 12 gebildeten VII. Gang führt. Naturgemäß ist dieser theoretische Stufensprung von 1.48 gleich dem Stufensprung beim Einbereichsgetriebe 18 der Figur 1 zwischen den Gängen IV und V. Beim Vielganggetriebe 19 wird der X. Gang durch multiplikative Verknüpfung der Zahnradstufe 17 mit der Splitgruppe 20 gebildet und hat somit eine Gangübersetzung von 1.22, die zu einem Stufensprung von 1.22 gegenüber dem IX. Gang führt (Figur 7, Spalte 2, Zeile 5S).

Wie bereits oben erläutert ist, hat beim Vielganggetriebe 19 der Figur 4 der XI. Gang eine Übersetzung von 1:1, die (Figur 7, Spalte 2, Zeile 6L) zu einem Stufensprung von 1.22 zum X. Gang und zu einem theoretischen Stufensprung von 1.49 gegenüber dem ebenfalls unter Ausschaltung der Splitgruppe 20 gebildeten IX. Gang führt. Gemäß Figur 6 wird beim Vielganggetriebe 19 der XII. Gang durch multiplikative Verknüpfung der durch die Eingangswelle 8 unter Vermittlung der Wechselschaltkupplung 24 angetriebenen Splitgruppe 20 mit der die Ausgangswelle 9 unter Vermittlung der Wechselschaltkupplung 23 antreibenden Getriebekonstanten 12 gebildet, so daß sich (Figur 7, Spalte 2, Zeile 6S) eine Gangübersetzung von 0.82 ergibt, die zu einem Getriebesprung von 1.22 gegenüber dem XI. Gang führt.

Wie sich aus der Spalte 2 der Figur 7 ergibt, ist bei dem Vielganggetriebe der Figur 4 eine enge Stufung der am meisten benutzten oberen Fahrgänge VII bis XII erreicht, wobei der hier konstante Stufensprung von 1.22 als Wert der Quadratwurzel aus dem theoretischen Stufensprung von 1.49 zwischen den obersten Gängen IX und XI festgelegt ist, die unter jeweiliger Ausschaltung der Splitgruppe 20 gebildet sind.

## Patentansprüche

1. Zahnräderwechselgetriebe mit koaxialer Anordnung von Ein- und Ausgangswelle und mit einer parallelen Vorgelegewelle, mit einer durch eine Zahnradstufe gebildeten und als Antriebsverbindung zwischen Eingangs- und Vorgelegewelle verwendeten Getriebekonstanten, und mit mehreren als Antriebsverbindung zwischen Vorgelegewelle und Ausgangswelle angeordneten Zahnradstufen, die jeweils fakultativ und in Verbindung mit der Getriebekonstanten zur Bildung von nicht geometrisch gestuften Gangübersetzungen einschaltbar sind,
**dadurch gekennzeichnet,**
daß bei Verwendung als Einbereichsgetriebe (18) die Getriebekonstante (11) eine kleinere Übersetzung aufweist als die Getriebekonstante (12) bei Verwendung als Vielganggetriebe (19), bei dem die Getriebekonstante (12) fakultativ mit einer durch eine Zahnradstufe gebildeten Splitgruppe (20) als Antriebsverbindung zwischen Eingangs- und Vorgelegewelle (8 und 10) einschaltbar ist, und daß für das Einbereichsgetriebe (18) einerseits und für das Vielganggetriebe (19) andererseits als Mitglieder einer Getriebebaureihe identische Zahnradstufen (13 bis 17) als Antriebsverbindung zwischen Vorgelegewelle (10) und Ausgangswelle (9) verwendet sind, und daß in dem als ein Mitglied der Getriebebaureihe ausgelegten Vielganggetriebe (19) der Quotient aus dem Übersetzungsverhältnis der Getriebekonstanten (12) und dem Übersetzungsverhältnis der Splitgruppe (20) wenigstens etwa gleich der Quadratwurzel aus dem Übersetzungssprung zwischen den beiden unter jeweiliger Ausschaltung der Splitgruppe (20) gebildeten höchsten Gängen (IX und XI) ist.

## Claims

1. Change-speed gearbox with an input and output shaft arranged coaxially and a parallel layshaft, with a constant mesh gear formed by a gear stage and used as the drive connection between the input shaft and the layshaft, and with a plurality of gear stages which are arranged as drive connections between the layshaft and the output shaft and can each be selected optionally and in conjunction with the constant mesh gear to form non-geometrically graduated gear ratios, characterized in that, in the case of use as a single-range gearbox (18), the constant mesh gear (11) has a smaller ratio than the constant mesh gear (12) in the case of use as a multi-speed gearbox (19), in which the constant mesh gear (12) can be selected optionally with a splitter group (20), formed by a gear stage, as the drive connection between the input shaft (8) and the layshaft (10), and in that, as members of a gearbox series, identical gear stages (13 to 17) are used as the drive connection between the layshaft (10) and the output shaft (9) for the single-range gearbox (18), on the one hand, and for the multi-speed gearbox (19), on the other, and in that, in the multi-speed gearbox (19) designed as a member of the gearbox series, the quotient of the transmission ratio of the constant mesh gear (12) and the transmission ratio of the splitter group (20) is at least approximately equal to the square root of the ratio jump between the two highest gears (IX and XI) each formed without the splitter group (20).

## Revendications

1. Transmission à engrenages avec disposition coaxiale d'un arbre d'entrée et d'un arbre de sortie et avec un arbre intermédiaire parallèle, avec une constante de transmission formée par un degré d'engrenage et utilisée comme liaison de commande entre l'arbre d'entrée et l'arbre intermédiaire, et avec plusieurs degrés d'engrenage disposés comme liaison de commande entre l'arbre intermédiaire et l'arbre de sortie, qui peuvent être chacun embrayés facultativement et en liaison avec les constantes de transmission pour la formation de rapports de changements de vitesse qui ne sont pas étagés de façon géométrique, caractérisée en ce que, pour une utilisation comme transmission à une seule gamme (18), la constante de transmission (11) présente une transmission plus petite que la constante de transmission (12) pour une utilisation comme transmission à plusieurs vitesses (19) pour laquelle la constante de transmission (12) peut être embrayée de façon facultative avec un groupe fractionné (20) formé par un degré d'engrenage comme liaison de commande entre l'arbre d'entrée et l'arbre de transmission (8 et 10), et que pour la transmission à une seule gamme (18) d'un côté et pour la transmission à plusieurs vitesses (19) de l'autre côté comme éléments d'une série de transmission, des degrés d'engrenage (13 à 17) identiques sont utilisés comme liaison de commande entre l'arbre intermédiaire (10) et l'arbre de sortie (9), et que dans la transmission à plusieurs vitesses (19) formée comme membre d'une série de transmission, le quotient formé à partir du rapport de transmission des constantes de transmission (12) et du rapport de transmission des groupes fractionnés (20) est au moins égal à la racine carrée formée à partir du saut de transmission entre les deux vitesses supérieures (IX et XI) formées sous mise hors circuit respective des groupes fractionnés (20).
